# EUROPEAN PATENT SPECIFICATION

(11) **EP 3 188 066 B1**
(45) Date of publication and mention of the grant of the patent: **16.08.2023**
(21) Application number: 16202582.9
(22) Date of filing: 07.12.2016
(51) Int. Cl.: G06F 21/56

(54) **A METHOD AND AN APPARATUS FOR MANAGING AN APPLICATION**
VERFAHREN UND VORRICHTUNG ZUR VERWALTUNG EINER ANWENDUNG
PROCÉDÉ ET APPAREIL DE GESTION D'UNE APPLICATION

(30) Priority: 28.12.2015 CN 201511001279
(43) Date of publication of application: 05.07.2017
(73) Proprietor: Xiaomi Inc., Beijing 100085 (CN)
(72) Inventor: QIU, Zifeng, Beijing, Beijing 100085 (CN); LIU, Xiaoxian, Beijing, Beijing 100085 (CN); QIU, Feng, Beijing, Beijing 100085 (CN)
(74) Representative: Sackin, Robert

(56) References cited:
- CN-A- 105 095 049
- CN-B- 103 002 163
- US-A1- 2014 007 106

## Description

### TECHNICAL FIELD

The present disclosure relates to a method and an apparatus for managing an application.

### BACKGROUND

With the increasing popularity of smart terminals and the increasing number of functions of smart terminals, more and more applications (apps for short) may be installed on smart terminals. These apps bring great convenience to a user and enrich the user's life.

However, presently these apps also bring the user a lot of trouble. For example, when an app is not used by a user, it may run in the background and push advertisements to the smart terminal that are not of interest to the user. Some apps, in the background, may monitor a user's behavior, which seriously violates the user's privacy. Since there may be a lot of background activity, the speed of the smart terminal is seriously slowed down, power consumption of the terminal is increased and battery life of the terminal is reduced.

US 2014/007106 A1 is relevant prior art.

### SUMMARY

In order to solve problems in the related art, the present disclosure provides a method and an apparatus for managing an application. The technical solutions may be described as follows The invention is defined by the independent claims and preferred embodiments are defined by the dependent claims.

According to a first aspect of embodiments of the present disclosure, a method for managing an application is provided, which includes:
if it is detected that a current application running in foreground of a terminal is switched to background for running, determining whether the current application is allowed to run in the background of the terminal according to a configuration file that includes application identification information of the current application, the configuration file at least including application identification information of a first application allowed to run in the background of the terminal and behavior identification information of a behavior allowed to be operated in the first application;
acquiring a behavior allowed to be operated in the current application according to the configuration file, if it is determined that the current application is allowed to run in the background of the terminal; and
closing behaviors in the current application other than the allowed behavior to be operated in the current application.

Closing behaviors in the current application other than the allowed behavior comprises determining a system resource required to be called for operating a first behavior, in which the first behavior includes any behavior in the current application other than the behavior allowed to be operated in the current application; and configuring in a configuration function of the current application that the current application is forbidden to call the system resource so as to close the first behavior.

Alternatively, the method further includes:
sending a record information file to a server, the record information file at least including terminal identification information of the terminal, application identification information and a length of running time of a second application running in the terminal during a period from a current time to a first time and behavior identification information of a behavior operated in the second application; the record information file being used by the server to generate a configuration file corresponding to the terminal identification information, and the first time being a time when the record information file is lately sent before the current time.

Alternatively, an operation of sending the record information file to the server may be performed before an operation of determining whether the current application is allowed to run in the background of the terminal.

Alternatively, the method further includes:
sending a download request carrying the terminal identification information to the server, the download request being used by the server to acquire the configuration file corresponding to the terminal identification information; and
receiving the configuration file corresponding to the terminal identification information sent by the server.

Alternatively, an operation of sending the download request to the serve may be performed before the operation of determining whether the current application is allowed to run in the background of the terminal.

Alternatively, the terminal includes a record information file, the record information file including application identification information of a third application running in the terminal during a preset period starting from the current time, and a length of running time of the third application for each running, and behavior identification information of a behavior operated in the third application for each running; and
the method further includes:
generating the configuration file according to the record information file.

Alternatively, an operation of generating the configuration file may be performed before the operation of determining whether the current application is allowed to run in the background of the terminal.

Alternatively, generating the configuration file according to the record information file includes:
calculating a total length of running time of each application running in the terminal from the record information file;
selecting an application with the total length of running time exceeding a preset period threshold, as the first application allowed to run;
calculating a number of times that each behavior included in the first application allowed to run is operated from the record information file;
selecting a behavior with the number of times exceeding a preset number threshold, as the behavior allowed to be operated in the first application; and
storing, in the configuration file, application identification information of the first application allowed to run and behavior identification information of the behavior allowed to be operated in the first application.

Alternatively, the behaviors in the current application at least include: a behavior of accessing mobile communication network, a behavior of using wireless fidelity, a behavior of pushing, a behavior of providing location service, a behavior of using a system timer, a behavior of freezing a process and a behavior of closing a process.

Alternatively, the method further includes:
closing the current application and disabling a self-start function of the current application, if it is determined that the current application is not allowed to run in the background of the terminal.

According to a second aspect of embodiments of the present disclosure, an apparatus for managing an application is provided, which includes:
a determining module, configured to: if it is detected that a current application running in foreground of the apparatus is switched to background for running, determine whether the current application is allowed to run in the background of the apparatus according to a configuration file that includes application identification information of the current application, the configuration file at least including application identification information of a first application allowed to run in the background of the apparatus and behavior identification information of a behavior allowed to be operated in the first application;
an acquiring module, configured to acquire a behavior allowed to be operated in the current application according to the configuration file, if the determining module determines that the current application is allowed to run in the background of the apparatus; and
a closing module, configured to close behaviors in the current application other than the behavior allowed to be operated in the current application and acquired by the acquiring module.

The closing module comprises sub-modules such that, while performing the allowed behavior, the behaviors of the current application other than the behavior allowed to be operated are closed by a determining sub-module configured to determine a system resource required to be called for operating a first behavior, and a configuring sub-module configured to configure in a configuration function of the current application that the current application is forbidden to call the system resource so as to close the first behavior, wherein the first behavior is any behavior in the current application other than the behavior allowed to be operated in the current application.

Alternatively, the apparatus further includes:
a first sending module, configured to send a record information file to a server, the record information file at least including apparatus identification information of the apparatus, application identification information and a length of running time of a second application running in the apparatus during a period from a current time to a first time and behavior identification information of a behavior operated in the second application; and the record information file being used by the server to generate a configuration file corresponding to the apparatus identification information, and the first time being a time when the record information file is lately sent before the current time.

Alternatively, the apparatus further includes:
a second sending module, configured to send a download request carrying the apparatus identification information to the server, the download request being used by the server to acquire the configuration file corresponding to the apparatus identification information; and
a receiving module, configured to receive the configuration file corresponding to the apparatus identification information sent by the server.

Alternatively, the apparatus includes a record information file, the record information file including application identification information of a third application running in the apparatus during a preset period starting from the current time, and a length of running time of the third application for each running and behavior identification information of a behavior operated in the third application for each running;
the apparatus further includes:
a generating module, configured to generate the configuration file according to the record information file.

Alternatively, the generating module includes:
a first calculating sub-module, configured to calculate a total length of running time of an application running in the apparatus from the record information file;
a first selecting sub-module, configured to select an application with the total length of running time calculated by the first calculating sub-module exceeding a preset period threshold, as the first application allowed to run;
a second calculating sub-module, configured to calculate a number of times that each behavior included in the first application allowed to run is operated from the record information file;
a second selecting sub-module, configured to select a behavior with the number of times calculated by the second calculating sub-module exceeding a preset number threshold, as the behavior allowed to be operated in the first application; and
a storing sub-module, configured to store, in the configuration file, application identification information of the first application allowed to run and selected by the first selecting sub-module and behavior identification information of the behavior allowed to be operated in the first application and selected by the second selecting sub-module.

Alternatively, the behaviors in the current application at least include: a behavior of accessing mobile communication network, a behavior of using wireless fidelity, a behavior of pushing, a behavior of providing location service, a behavior of using a system timer, a behavior of freezing a process and a behavior of closing a process.

Alternatively, the apparatus further includes: a closing and disabling module, configured to close the current application and disable a self-start function of the current application, if the determining module determines that the current application is not allowed to run in the background of the apparatus.

According to a third aspect of embodiments of the present disclosure, a device for managing an application is provided, which includes:
a processor; and
a memory configured to store an instruction executable by the processor;
in which the processor is configured to:
   if it is detected that a current application running in foreground of the device is switched to background for running, determine whether the current application is allowed to run in the background of the device according to a configuration file that includes application identification information of the current application, the configuration file at least including application identification information of a first application allowed to run in the background of the device and behavior identification information of a behavior allowed to be operated in the first application;
   acquire a behavior allowed to be operated in the current application according to the configuration file, if it is determined that the current application is allowed to run in the background of the device; and
   close behaviors in the current application other than the allowed behaviorto be operated in the current application. Closing behaviors in the current application other than the allowed behavior comprises determining a system resource required to be called for operating a first behavior, in which the first behavior includes any behavior in the current application other than the behavior allowed to be operated in the current application; and configuring in a configuration function of the current application that the current application is forbidden to call the system resource so as to close the first behavior.

The technical solutions provided in the present disclosure may have following advantageous effects.

The applications allowed to run and behaviors allowed to be operated, which are required by the user to run or operate, are determined for the terminal according to the configuration file, and other applications not allowed to run and behaviors not allowed to be operated, which are not required by the user, are closed. The effects of improving a running speed of the system of the terminal, reducing power consumption of the terminal and extending the battery life of the terminal may be realized because the applications not allowed to run and behaviors not allowed to be operated are closed.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the present disclosure.
Fig. 1 is a schematic diagram illustrating a network architecture applied in the present disclosure;
Fig. 2 is a flow chart showing a method for acquiring a configuration file by a terminal according to an example embodiment of the present disclosure;
Fig. 3 is a flow chart showing a method for managing a current application according to a configuration file according to another example embodiment of the present disclosure;
Fig. 4A is a block diagram illustrating an apparatus for managing an application according to an example embodiment of the present disclosure;
Fig. 4B is a block diagram illustrating an apparatus for closing a first behavior in a current application according to an example embodiment of the present disclosure;
Fig. 4C is a block diagram illustrating an apparatus for managing an application according to an example embodiment of the present disclosure;
Fig. 4D is a block diagram illustrating an apparatus for managing an application according to an example embodiment of the present disclosure;
Fig. 4E is a block diagram illustrating an apparatus for generating a configuration file according to an example embodiment of the present disclosure; and
Fig. 5 is a block diagram illustrating a device for managing an application according to an example embodiment of the present disclosure.

### DETAILED DESCRIPTION

Example embodiments will be described in detail herein, and examples thereof are illustrated in accompanying drawings. Throughout figures referred by the following description, the same reference number in different figures indicates the same or similar elements unless otherwise stated. Implementations described in the following exemplary embodiments do not represent all the implementations consistent with the present disclosure. Instead, they are only examples of the device and method consistent with some aspects of the present disclosure detailed in the appended claims.

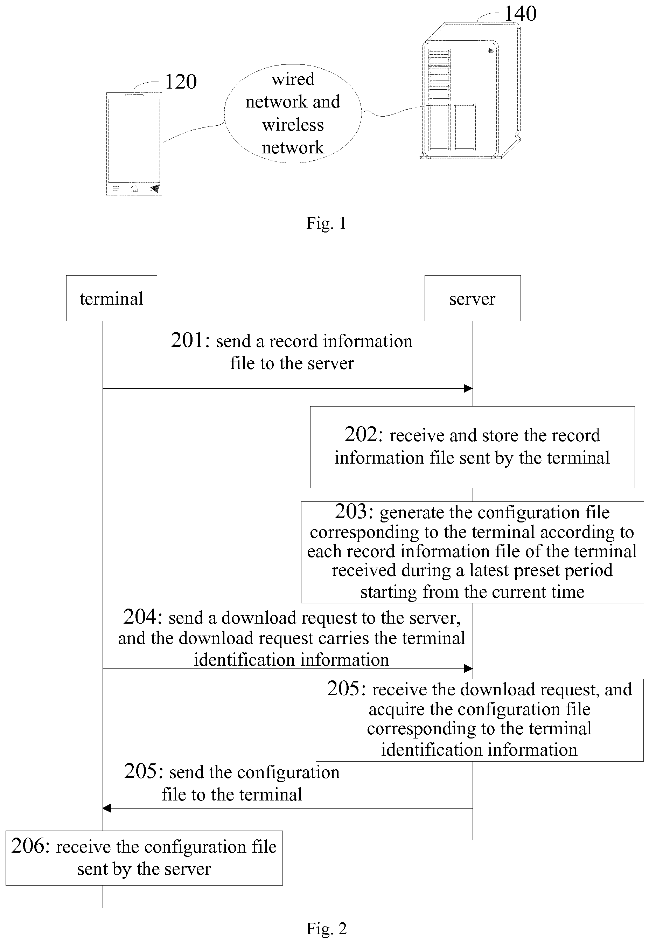

Referring to Fig. 1, Fig. 1 is a schematic diagram illustrating a network architecture applied in the present disclosure, the network architecture may include a terminal 120 and a server 140.

The terminal 120 may be mounted, or installed with a system adaptable thereto. The terminal 120 may be further mounted with an application or the application may be installed on the terminal and run on the terminal . The system in the terminal 120 may manage the applications, running on the terminal 120 and the behavior operated in the applications. The terminal 120 may also interact with a user. The user may input information, view information and realize other functions through an interface of the terminal 120.

The terminal 120 may be a smart phone, a tablet PC, a smart television, an e-book reader, a multimedia player, a portable laptop, a desktop computer, etc.

The terminal 120 and the server 140 may be coupled to each other via wireless network or wired network.

A method for managing an application is provided by embodiments of the present disclosure. The method includes two processes. The first one is to acquire a configuration file for the terminal, and the configuration file at least includes application identification information of an application allowed to run in the background on the terminal and behavior identification information of a behavior is allowed to be operated in the application. The second one is to manage a current application of the terminal according to the configuration file if the current application running in foreground of the terminal is switched to the background for running.

For the above first process, detailed implementation may be described as follows with reference to Fig. 2.

In block 201, the terminal sends a record information file to a server.

The record information file at least includes terminal identification information of the terminal, application identification information and a length of running time of an application running in the terminal during a period from a current time to a first time and behavior identification information of a behavior allowed to be operated in the application. The first time may be a time when the record information file is last sent before the current time.

Alternatively, all information in the record information file may be recorded during a process of running the application by the terminal. Detailed implementation may be described as follows.

In the terminal, when starting to run one application, the terminal starts to monitor a whole running process of the application in real-time, and stores the application identification information of this application in the record information file. If the terminal monitors that one behavior of this application is operated, the behavior identification information of this behavior may be acquired and stored in the record information file. When the terminal ends this application, the length of running time of this application for this time is acquired and stored in the record information file.

In the record information file, there is a correspondence between the behavior identification information acquired and the application identification information, and there is a correspondence between the length of running time acquired and the application identification information.

Alternatively, when starting to operate one behavior, the application needs to call a system resource required for operating this behavior. By monitoring the called system resource, the terminal may determine the behavior operated by the application. For example, when the application starts to push a message, it needs to call a system resource for pushing to operate a behavior of pushing the message. Then the application submits a calling request to the terminal and this calling request includes resource identification information of the system resource for pushing. The terminal may receive this calling request and determine according to the resource identification information carried in the calling request that the application starts to operate the behavior of pushing the message.

Alternatively, the terminal may delete the record information file after sending the record information file to the server. The time of sending the record information file by the terminal may be periodic or random. For example, it may be sent at the same time every day, such as eight, nine or ten o'clock, or at any time point every day, or at an interval of a plurality of days , or one or more times per day.

In block 202, the server receives and stores the record information file sent by the terminal.

In addition to the record information file sent by the above terminal, the server also receives the record information files sent by other terminals, and stores the received record information file once receiving the record information file.

In block 203, the server generates the configuration file corresponding to the terminal according to each record information file of the terminal received during a preset period of time closest to the current time.

This step may be that, the server may acquire the record information file which is received during the preset period of time closest to the current time and includes terminal identification information from the stored record information files, and calculate a total length of running time of each application running in the terminal in the acquired record information file; and select an application with the total length of running time exceeding a preset period threshold as the application allowed to run from the applications running in the terminal; and calculate the number of times that each behavior included in the application allowed to run is operated in the acquired record information file; and select a behavior with the number of times exceeding a preset number threshold as the behavior allowed to be operated; and store a correspondence between the application identification information of the application allowed to run and the behavior identification information of the behavior allowed to be operated in the configuration file.

Alternatively, the preset period of time may be a month, half of a month or a week and so on. The server may store a correspondence between the terminal identification information of the terminal and the configuration file after generating the configuration file.

Alternatively, the application with the total length of running time exceeding the preset period threshold may be an application running often for the user. Sometimes, it is required by the user that this application continues to run after being switched to the background of the terminal. For example, a chatting application is a common application used by the user. The total length of running time of the chatting application exceeds the preset period threshold usually. The user wishes that the chatting application continues to run for receiving messages sent by friends after switching the chatting application to the background of the terminal. So this type of application may be configured to be allowed to run in the background of the terminal, thereby avoiding an impact on the user.

In the application allowed to run, the behavior which is operated for many times, exceeding the preset number threshold, (i.e., the number of times of running exceeds the preset number threshold) may be a behavior of realizing basic functions of the application. For example, for the chatting application, the basic functions of the chatting application are sending messages and receiving messages, and the behavior of accessing a network needs to be operated each time the message is sent or received. Therefore, for the chatting application, the use frequency of the behavior of accessing the network is very high, so by configuring the behavior with the number of times of running exceeding the preset number threshold as the behavior allowed to be operated, it may be ensured that the basic functions of the application run normally.

The application with the total length of running time not exceeding the preset period threshold may be an application not running often for the user. When this application is switched to the background, the user does not want this application to continue to run. For example, a map application. The map application may be used only in a case that the user needs navigation or to locate a position. The use frequency and use time are little in the user's daily life. The total length of running time, therefore, does not exceed the preset period threshold often. When the map application is switched to the background, it may be because the navigation is ended or the position is located, such that it is not required to continue to run the map application. Therefore, the application with the total length of running time not exceeding the preset period threshold may be configured so that the application is not allowed to run.

Alternatively, the server may generate the configuration file of the terminal by referring to the record information files sent by other terminals. The details may be described as follows.

After the server acquires the application allowed to run according to the above process, the record information files of all terminals which are received during the preset period of time closest to the current time may be acquired from the stored record information files; and the total length of running time of each application allowed to run running in all the terminals is calculated in the record information files of all the terminals; and if the total length of running time of an application allowed to run running in all the terminals reaches a preset period, then the application identification information of the application allowed to run is stored in the configuration file.

The terminal may acquire its configuration file from the server once at intervals, which is described as follows.

In block 204, the terminal sends a download request to the server, and the download request carries the terminal identification information.

In block 205, the server receives the download request, and acquires the configuration file corresponding to the terminal identification information, and sends the configuration file to the terminal.

This step may be that, the server receives the download request, and acquires the corresponding configuration file from the correspondence between the terminal identification information and the configuration file according to the terminal identification information carried in the download request, and sends the configuration file to the terminal.

In block 206, the terminal receives the configuration file sent by the server.

Alternatively, the terminal needs not to send the record information file to the server and needs not to acquire the configuration file from the server. In this case, the record information file may include application identification information of an application running in the terminal during a preset period starting from the current time, and a length of running time of the application for each running, and behavior identification information of a behavior operated in the application for each running.

Accordingly, the terminal may generate the configuration file based on this record information file. Regarding the generation process, a reference may be made to related content of generating the configuration file by the server in step 203, which is not described in detail herein.

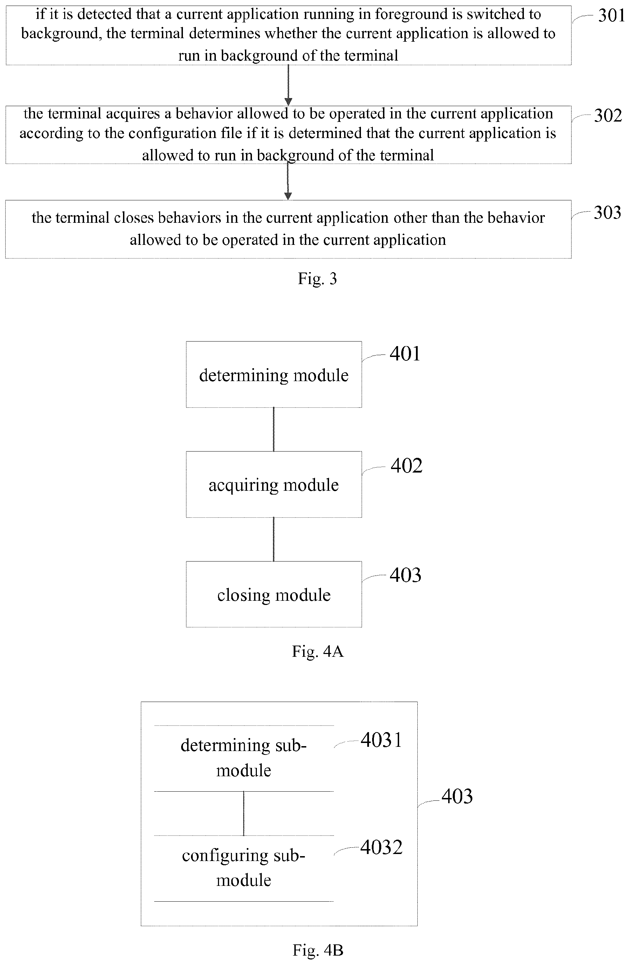

After the terminal completes the above first process, it acquires the configuration file, and then it may manage the application which is switched to the background of the terminal according to the configuration file, i.e. perform the above second process. The second process may be realized in detail as follows by referring to Fig. 3.

In block 301, the terminal determines whether the current application is allowed to run in the background of the terminal if it is detected that the current application running in the foreground is switched to the background for running.

The step may be that the terminal acquires the application identification information of the current application. If the application identification information of the applications allowed to run which is stored in the configuration file includes the application identification information of the current application, it may be determined that the current application is allowed to run in the background of the terminal, otherwise, it may be determined that the current application is not allowed to run in the background of the terminal.

In block 302, the terminal acquires a behavior allowed to be operated in the current application according to the configuration file if it is determined that the current application is allowed to run in the background of the terminal.

This step may be that the terminal may acquire the corresponding behavior identification information from the correspondence between the application identification information and the behavior identification information which is stored in the configuration file according to the application identification information of the current application, and the behavior corresponding to the acquired behavior identification information is the behavior allowed to be operated in the current application.

In block 303, the terminal closes behaviors in the current application other than the behavior allowed to be operated in the current application.

The step may be that the terminal determines a system resource required to be called for operating a first behavior, and configures in a configuration function of the current application that the current application is forbidden to call the system resource so as to close the first behavior. The first behavior includes any behavior in the current application other than the behavior allowed to be operated in the current application.

In conclusion, with the method for managing an application according to embodiments of the present disclosure, the applications allowed to run and behaviors allowed to be operated, which are required by the user to run or operate, are determined for the terminal according to the configuration file, and other applications not allowed to run and behaviors not allowed to be operated, which are not required by the user, are closed. The effects of improving a running speed of the system of the terminal, reducing power consumption of the terminal and extending the battery life of the terminal may be realized because the applications not allowed to run and behaviors not allowed to be operated are closed.

Apparatus embodiments of the present disclosure are described as follows and may be used to execute the method embodiments of the present disclosure. Regarding details undisclosed in the apparatus embodiments of the present disclosure, reference may be made to the method embodiments of the present disclosure.

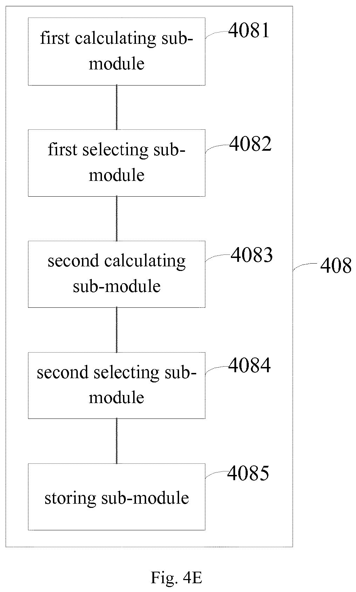

Fig. 4A is a block diagram illustrating an apparatus for managing an application according to an example embodiment of the present disclosure. As shown in Fig. 4A, the apparatus for managing an application may include but be not limited to a determining module 401, an acquiring module 402 and a closing module 403.

The determining module 401 is configured to: if it is detected that a current application running in foreground of the apparatus is switched to background for running, determine whether a current application is allowed to run in the background of the apparatus according to a configuration file. The configuration file at least includes application identification information of a first application allowed to run in the background of the apparatus and behavior identification information of a behavior allowed to be operated in the first application.

The acquiring module 402 is configured to acquire a behavior allowed to be operated in the current application according to the configuration file, if the determining module 401 determines that the current application is allowed to run in the background of the apparatus.

The closing module 403 is configured to close behaviors in the current application other than the behavior allowed to be operated in the current application and acquired by the acquiring module 402.

Alternatively, behaviors in the application at least include: a behavior of accessing mobile communication network, a behavior of using wireless fidelity, a behavior of pushing, a behavior of providing location service, a behavior of using a system timer, a behavior of freezing a process and a behavior of closing a process.

Alternatively, after the application identification information of the current application is acquired, and if the application identification information of the applications allowed to run in the background of the apparatus which is stored in the configuration file includes the application identification information of the current application, the determining module 401 may determine that the current application is allowed to run in the background of the apparatus, otherwise, the determining module 401 may determine that the current application is not allowed to run in the background of the apparatus.

Alternatively, the acquiring module 402 may acquire the corresponding behavior identification information from the correspondence between the application identification information and the behavior identification information which is stored in the configuration file according to the application identification information of the current application, and the behavior corresponding to the acquired behavior identification information is the behavior allowed to be operated in the current application.

Alternatively, referring to Fig. 4B, the closing module 403 includes a determining sub-module 4031 and a configuring sub-module 4032.

The determining sub-module 4031 is configured to determine a system resource required to be called for operating a first behavior, in which the first behavior includes any behavior in the current application other than the behavior allowed to be operated in the current application.

The configuring sub-module 4032 is configured to configure in a configuration function of the current application that the current application is forbidden to call the system resource determined by the determining sub-module 4031, so as to close the first behavior.

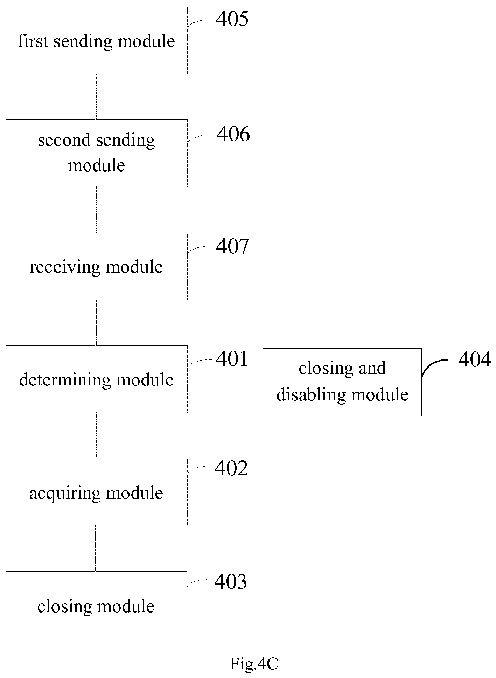

Alternatively, referring to Fig. 4C, the apparatus further includes a closing and disabling module 404.

The closing and disabling module 404 is configured to close the current application and disable a self-start function of the current application, if the determining module 401 determines that the current application is not allowed to run in the background of the apparatus.

Alternatively, again referring to Fig. 4C, the apparatus further includes a first sending module 405.

The first sending module 405 is configured to send a record information file to a server. The record information file at least includes apparatus identification information of the apparatus, application identification information and a length of running time of a second application running in the apparatus during a period from a current time to a first time, and behavior identification information of a behavior operated in the second application. The record information file is used by the server to generate a configuration file corresponding to the apparatus identification information. The first time is a time when the record information file is last sent before the current time.

Alternatively, all information in the record information file may be recorded during a process of running the application by the apparatus. Detailed implementation may be described as follows.

In the apparatus, if the apparatus starts to run one application, it starts to monitor a whole running process of the application in real-time, and stores the application identification information of this application in the record information file. If the apparatus monitors that one behavior of this application is operated, it acquires the behavior identification information of this behavior and stores it in the record information file. When the apparatus ends this application, it acquires the length of running time of this application and stores it in the record information file.

In the record information file, there is a correspondence between the acquired behavior identification information and the application identification information, and there is a correspondence between the acquired length of running time and the application identification information.

Alternatively, when the application starts to run one behavior, it needs to call a system resource required for operating this behavior. By monitoring the called system resource, the apparatus may determine the behavior operated by the application. For example, if the application starts to push a message, it needs to call a system resource for pushing to run a behavior of pushing the message. Then the application submits a calling request to the apparatus and this calling request includes resource identification information of the system resource for pushing. The apparatus may receive this calling request and determine according to the resource identification information carried in the calling request that the application starts to operate the behavior of pushing the message.

Alternatively, the first sending module 405 may delete the record information file after sending the record information file to the server. The time when the first sending module 405 sends the record information file may be periodic or random. For example, the record information file may be sent at the same time every day, such as eight, nine or ten o'clock, or at any time every day, or at an interval of a plurality of days , or one or more times per day.

Alternatively, again referring to Fig. 4C, the apparatus further includes a second sending module 406 and a receiving module 407.

The second sending module 406 is configured to send a download request carrying the apparatus identification information to the server, the download request being used by the server to acquire the configuration file corresponding to the apparatus identification information.

The receiving module 407 is configured to receive the configuration file corresponding to the apparatus identification information sent by the server.

Alternatively, the apparatus includes a record information file. The record information file includes application identification information of a third application running in the apparatus during a preset period starting from the current time, and a length of running time of the third application for each running, and behavior identification information of a behavior operated in the third application for each running.

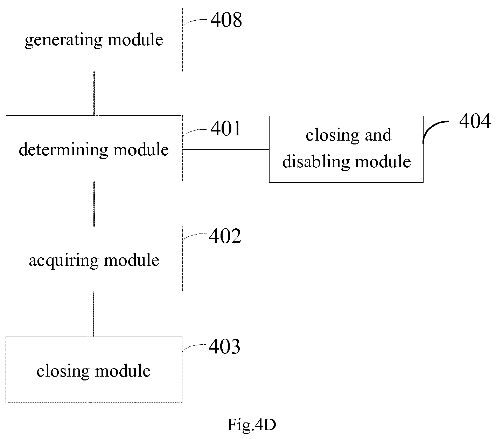

Alternatively, referring to Fig. 4D, the apparatus further includes a generating module 408.

The generating module 408 is configured to generate the configuration file according to the record information file.

Alternatively, referring to Fig. 4D, the generating module 408 includes a first calculating sub-module 4081, a first selecting sub-module 4082, a second calculating sub-module 4083, a second selecting sub-module 4084 and a storing sub-module 4085.

The first calculating sub-module 4081 is configured to calculate a total length of running time of each application running in the apparatus from the recording information file.

The first selecting sub-module 4082 is configured to select an application with the total length of running time calculated by the first calculating sub-module 4081 exceeding a preset period threshold, as the first application allowed to run.

The second calculating sub-module 4083 is configured to acquire the number of times that each behavior included in the first application allowed to run is operated from the record information file.

The second selecting sub-module 4084 is configured to select a behavior with the number of times calculated by the second calculating sub-module 4083 exceeding a preset number threshold, as the behavior allowed to be operated in the first application.

The storing sub-module 4085 is configured to store, in the configuration file, application identification information of the first application allowed to run and selected by the first selecting sub-module 4082 and behavior identification information of the behavior allowed to be operated in the first application and selected by the second selecting sub-module 4084.

In conclusion, with the apparatus for managing an application according to embodiments of the present disclosure, the applications allowed to run and behaviors allowed to be operated, which are required by the user to run or operate, are determined for the terminal according to the configuration file, and other applications not allowed to run and behaviors not allowed to be operated, which are not required by the user, are closed. The effects of improving running speed of the system of the terminal, reducing power consumption of the terminal and extending the battery life of the terminal may be realized because the applications not allowed to run and behaviors not allowed to be operated are closed.

With respect to the apparatuses in the above embodiments, the specific manners for performing operations for individual modules therein have been described in detail in the embodiments regarding the methods, which are not elaborated herein again.

A device for managing an application is provided in an example embodiment of the present disclosure, which may realize the method for managing an application provided in the present disclosure. The device may include a processor and a memory configured to store an instruction executable by the processor.

The processor is configured to:
if it is detected that a current application running in foreground of the device is switched to background for running, determine whether the current application is allowed to run in the background of the device according to a configuration file, in which the configuration file at least includes application identification information of a first application allowed to run in the background of the device and behavior identification information of a behavior allowed to be operated in the first application;
acquire a behavior allowed to be operated in the current application according to the configuration file, if it is determined that the current application is allowed to run in the background of the device; and
close behaviors in the current application other than the behavior allowed to be operated in the current application.

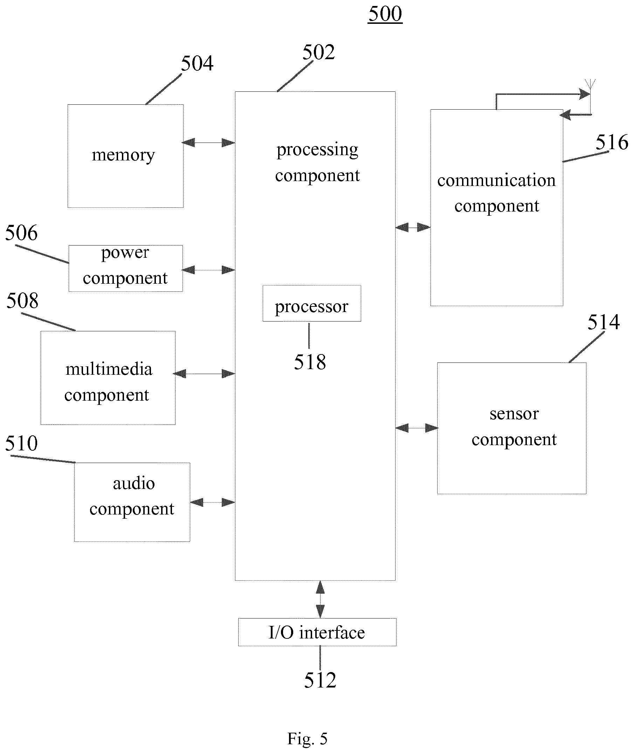

Fig. 5 is a block diagram illustrating a device for managing an application according to an example embodiment of the present disclosure. For example, the device 500 may be a mobile phone, a computer, a digital broadcasting terminal, a messaging device, a game console, a tablet device, a medical device, a fitness equipment, a Personal Digital Assistant PDA, etc.

Referring to Fig. 5, the device 500 may include the following one or more components: a processing component 502, a memory 504, a power component 506, a multimedia component 508, an audio component 510, an Input/Output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 508 includes a front camera and/or a rear camera. The front camera and/or the rear camera may receive external multimedia data while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface for the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500 and relative positioning of components (e.g. the display and the keypad of the device 500). The sensor component 514 may also detect a change in position of the device 500 or of a component in the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate wired or wireless communication between the device 500 and other devices. The device 500 can access a wireless network based on a communication standard, such as WIFI, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 504 including instructions. The above instructions are executable by the processor 518 in the device 500, for performing the above-described methods. For example, the non-transitory computer-readable storage medium may be a ROM, a RAM, a CD-ROM, a magnetic tape, a floppy disc, an optical data storage device, and the like.

If it is detected that a current application running in foreground of the device 500 is switched to background for running, it is determined whether the current application is allowed to run in the background of the device 500 according to a configuration file. The configuration file at least includes application identification information of a first application allowed to run in the background of the device 500, and behavior identification information of a behavior allowed to be operated in the first application;
a behavior allowed to be operated in the current application is acquired according to the configuration file if it is determined that the current application is allowed to run in the background of the device 500; and
behaviors in the current application other than the behavior allowed to be operated in the current application are closed.

Alternatively, the method further includes:
sending a record information file to a server, in which the record information file at least includes device identification information of the device 500, application identification information and a length of running time of a second application running in the device 500 during a period from a current time to a first time and behavior identification information of a behavior operated in the second application, and the record information file is used by the server to generate a configuration file corresponding to the device identification information, and the first time is a time when the record information file is last sent before the current time.

Alternatively, the method further includes:
sending a download request carrying the device identification information to the server, in which the download request is used by the server to acquire the configuration file corresponding to the device identification information; and
receiving the configuration file corresponding to the device identification information sent by the server.

Alternatively, the device 500 includes a record information file, the record information file including application identification information of a third application running in the device 500 during a preset period starting from the current time, and a length of running time of the third application for each running, and behavior identification information of a behavior operated in the third application for each running; and
the method further includes:
generating the configuration file according to the record information file.

Alternatively, generating the configuration file according to the record information file includes:
calculating a total length of running time of each application running in the device 500, in the recording information file;
selecting an application with the total length of running time exceeding a preset period threshold, as the first application allowed to run;
calculating the number of times that each behavior in the first application allowed to run is operated, in the record information file;
selecting a behavior with the number of times of running exceeding a preset number threshold, as the behavior allowed to be operated in the first application; and
storing, in the configuration file, application identification information of the first application allowed to run and behavior identification information of the behavior allowed to be operated in the first application.

Alternatively behaviors in the application at least include: a behavior of accessing mobile communication network, a behavior of using wireless fidelity, a behavior of pushing, a behavior of providing location service, a behavior of using a system timer, a behavior of freezing a process and a behavior of closing a process.

Alternatively, the method further includes:
closing the current application and disabling a self-start function of the current application, if it is determined that the current application is not allowed to run in the background of the device 500.

Alternatively, closing behaviors in the current application other than the behavior allowed to be operated in the current application includes:
determining a system resource required to be called for operating a first behavior, in which the first behavior includes any behavior in the current application other than the behavior allowed to be operated in the current application; and
configuring in a configuration function of the current application that the current application is forbidden to call the system resource so as to close the first behavior.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for managing an application, comprising:
if it is detected that a current application running in foreground of a terminal is switched to background for running, determining (301) whether the current application is allowed to run in the background of the terminal according to a configuration file that includes application identification information of the current application, wherein the configuration file at least comprises application identification information of a first application allowed to run in the background of the terminal and behavior identification information of a behavior allowed to be operated in the first application;
acquiring (302) a behavior allowed to be operated in the current application according to the configuration file, if it is determined that the current application is allowed to run in the background of the terminal; and
closing (303) behaviors in the current application other than the behavior allowed to be operated while performing the allowed behavior, comprises:
determining a system resource required to be called for operating a first behavior, wherein the first behavior is any behavior in the current application other than the behavior allowed to be operated in the current application; and configuring in a configuration function of the current application that the current application is forbidden to call the system resource so as to close the first behavior.

2. The method according to claim 1, further comprising:
sending (201) a record information file to a server, wherein the record information file at least comprises terminal identification information of the terminal, application identification information and a length of running time of a second application running in the terminal during a period from a current time to a first time and behavior identification information of a behavior operated in the second application, and the record information file is used by the server to generate a configuration file corresponding to the terminal identification information, and the first time is a time when the record information file is last sent before the current time.

3. The method according to claim 2, further comprising:
sending (204) a download request carrying the terminal identification information to the server, wherein the download request is used by the server to acquire the configuration file corresponding to the terminal identification information; and
receiving (206) the configuration file corresponding to the terminal identification information sent by the server.

4. The method according to claim 1, wherein the terminal comprises a record information file, wherein the record information file comprises application identification information of a third application running in the terminal during a preset period starting from the current time, and a length of running time of the third application for each running, and behavior identification information of a behavior operated in the third application for each running; and
the method further comprises:
generating the configuration file according to the record information file.

5. The method according to claim 4, wherein generating the configuration file according to the record information file comprises:
calculating a total length of running time of an application running in the terminal, in the record information file;
selecting an application with the total length of running time exceeding a preset period threshold, as the first application allowed to run;
calculating a number of times that each behavior included in the first application allowed to run is operated, in the record information file;
selecting a behavior with the number of times exceeding a preset number threshold, as the behavior allowed to be operated in the first application; and
storing, in the configuration file, application identification information of the first application allowed to run and behavior identification information of the behavior allowed to be operated in the first application.

6. The method according to claim 1, wherein the behaviors in the current application at least comprise: a behavior of accessing mobile communication network, a behavior of using wireless fidelity, a behavior of pushing, a behavior of providing location service, a behavior of using a system timer, a behavior of freezing a process and a behavior of closing a process.

7. The method according to claim 1, further comprising:
closing the current application and disabling a self-start function of the current application, if it is determined that the current application is not allowed to run in the background of the terminal.

8. An apparatus for managing an application, comprising:
a determining module (401), configured to: if it is detected that a current application running in foreground of the apparatus is switched to background for running, determine whether the current application is allowed to run in the background of the apparatus according to a configuration file that includes application identification information of the current application, wherein the configuration file at least comprises application identification information of a first application allowed to run in the background of the apparatus and behavior identification information of a behavior allowed to be operated in the first application;
an acquiring module (402), configured to acquire a behavior allowed to be operated in the current application according to the configuration file, if the determining module (401) determines that the current application is allowed to run in the background of the apparatus; and
a closing module (403), configured to close behaviors in the current application other than the behavior allowed to be operated and acquired by the acquiring module (402) while performing the allowed behavior, wherein the behaviors of the current application other than the behavior allowed to be operated are closed by determining a system resource required to be called for operating a first behavior, and configuring in a configuration function of the current application that the current application is forbidden to call the system resource so as to close the first behavior, wherein the first behavior is any behavior in the current application other than the behavior allowed to be operated in the current application.

9. The apparatus according to claim 8, further comprising:
a first sending module (405), configured to send a record information file to a server, wherein the record information file at least comprises apparatus identification information of the apparatus, application identification information and a length of running time of a second application running in the apparatus during a period from a current time to a first time and behavior identification information of a behavior operated in the second application, and the record information file is used by the server to generate a configuration file corresponding to the apparatus identification information, and the first time is a time when the record information file is last sent before the current time.

10. The apparatus according to claim 9, further comprising:
a second sending module (406), configured to send a download request carrying the apparatus identification information to the server, wherein the download request is used by the server to acquire the configuration file corresponding to the apparatus identification information; and
a receiving module (407), configured to receive the configuration file corresponding to the apparatus identification information sent by the server.

11. The apparatus according to claim 8, wherein the apparatus comprises a record information file, wherein the record information file comprises application identification information of a third application running in the apparatus during a preset period starting from the current time, and a length of running time of the third application for each running and behavior identification information of a behavior operated in the third application for each running; and
the apparatus further comprises:
a generating module (408), configured to generate the configuration file according to the record information file.

12. The apparatus according to claim 11, wherein the generating module (408) comprises:
a first calculating sub-module (4081), configured to calculate a total length of running time of an application running in the apparatus, in the record information file;
a first selecting sub-module (4082), configured to select an application with the total length of running time calculated by the first calculating sub-module (4081) exceeding a preset period threshold, as the first application allowed to run;
a second calculating sub-module (4083), configured to calculate a number of times that each behavior included in the first application allowed to run is operated, in the record information file;
a second selecting sub-module (4084), configured to select a behavior with the number of times calculated by the second calculating sub-module (4083) exceeding a preset number threshold, as the behavior allowed to be operated in the first application; and
a storing sub-module (4085), configured to store, in the configuration file, application identification information of the first application allowed to run and selected by the first selecting sub-module (4082) and behavior identification information of the behavior allowed to be operated in the first application and selected by the second selecting sub-module (4084).

13. A computer-readable storage medium having stored therein instructions that, when executed by a processor of a device, causes the device to perform the method for managing an application according to any one of claims 1 to 7.

## Patentansprüche

1. Verfahren zur Verwaltung einer Anwendung, das Folgendes beinhaltet:
wenn festgestellt wird, dass eine aktuelle Anwendung, die im Vordergrund eines Endgeräts läuft, zum Laufen auf Hintergrund umgeschaltet wird, Bestimmen (301), ob die aktuelle Anwendung im Hintergrund des Endgeräts laufen darf, gemäß einer Konfigurationsdatei, die Anwendungsidentifikationsinformationen der aktuellen Anwendung aufweist, wobei die Konfigurationsdatei mindestens Anwendungsidentifikationsinformationen einer ersten Anwendung beinhaltet, die im Hintergrund des Endgeräts laufen darf, und Verhaltensidentifikationsinformationen eines Verhaltens, das in der ersten Anwendung betrieben werden darf, beinhaltet;
Erfassen (302) eines Verhaltens, das in der aktuellen Anwendung betrieben werden darf, gemäß der Konfigurationsdatei, wenn bestimmt wird, dass die aktuelle Anwendung im Hintergrund des Endgeräts laufen darf; und
Schließen (303) von Verhalten in der aktuellen Anwendung außer dem Verhalten, das betrieben werden darf, während das zugelassene Verhalten durchgeführt wird, beinhaltend:
Bestimmen einer Systemressource, die zum Betreiben eines ersten Verhaltens aufgerufen werden muss, wobei das erste Verhalten irgendein Verhalten in der aktuellen Anwendung außer dem Verhalten ist, das in der aktuellen Anwendung betrieben werden darf; und Konfigurieren in einer Konfigurationsfunktion der aktuellen Anwendung, dass es der aktuellen Anwendung verboten ist, die Systemressource aufzurufen, um das erste Verhalten zu schließen.

2. Verfahren nach Anspruch 1, das ferner Folgendes beinhaltet:
Senden (201) einer Datensatzinformationsdatei an einen Server, wobei die Datensatzinformationsdatei mindestens Endgerätidentifikationsinformationen des Endgeräts, Anwendungsidentifikationsinformationen und eine Laufzeitdauer einer zweiten Anwendung, die während einer Zeitspanne von einer aktuellen Zeit bis zu einer ersten Zeit in dem Endgerät läuft, und Verhaltensidentifikationsinformationen eines in der zweiten Anwendung betriebenen Verhaltens beinhaltet und die Datensatzinformationsdatei von dem Server zum Generieren einer Konfigurationsdatei, die den Endgerätidentifikationsinformationen entspricht, verwendet wird und die erste Zeit eine Zeit ist, zu der die Datensatzinformationsdatei vor der aktuellen Zeit zuletzt gesendet wird.

3. Verfahren nach Anspruch 2, das ferner Folgendes beinhaltet:
Senden (204) einer Download-Anforderung, die die Endgerätidentifikationsinformationen zum Server trägt,
wobei die Download-Anforderung vom Server zum Erfassen der Konfigurationsdatei, die den Endgerätidentifikationsinformationen entspricht, verwendet wird; und
Empfangen (206) der Konfigurationsdatei, die den vom Server gesendeten Endgerätidentifikationsinformationen entspricht.

4. Verfahren nach Anspruch 1, wobei das Endgerät eine Datensatzinformationsdatei beinhaltet, wobei die Datensatzinformationsdatei Anwendungsidentifikationsinformationen einer dritten Anwendung, die während einer voreingestellten Zeitspanne ab der aktuellen Zeit in dem Endgerät läuft, und eine Laufzeitdauer der dritten Anwendung für jedes Laufen und Verhaltensidentifikationsinformationen eines in der dritten Anwendung betriebenen Verhaltens für jedes Laufen beinhaltet; und
das Verfahren ferner Folgendes beinhaltet:
Generieren der Konfigurationsdatei gemäß der Datensatzinformationsdatei.

5. Verfahren nach Anspruch 4, wobei Generieren der Konfigurationsdatei gemäß der Datensatzinformationsdatei Folgendes beinhaltet:
Berechnen einer gesamten Laufzeitdauer einer im Endgerät laufenden Anwendung in der Datensatzinformationsdatei;
Auswählen einer Anwendung, bei der die gesamte Laufzeitdauer einen voreingestellten Zeitspannenschwellenwert übersteigt, als die erste Anwendung, die laufen darf;
Berechnen der Anzahl, wie oft jedes Verhalten betrieben wird, das in der ersten Anwendung, die laufen darf, enthalten ist, in der Datensatzinformationsdatei;
Auswählen eines Verhaltens, bei dem die Anzahl einen voreingestellten Anzahlschwellenwert übersteigt, als das Verhalten, das in der ersten Anwendung betrieben werden darf; und
Speichern, in der Konfigurationsdatei, von Anwendungsidentifikationsinformationen der ersten Anwendung, die laufen darf, und Verhaltensidentifikationsinformationen des Verhaltens, das in der ersten Anwendung betrieben werden darf.

6. Verfahren nach Anspruch 1, wobei die Verhalten in der aktuellen Anwendung zumindest Folgendes beinhalten: ein Verhalten des Einsteigens in ein Mobilkommunikationsnetz, ein Verhalten des Verwendens von Wireless-Fidelity, ein Verhalten des Sendens per Push, ein Verhalten des Bereitstellens eines Ortungsdienstes, ein Verhalten des Verwendens des System-Zeitgebers, ein Verhalten des Blockierens eines Prozesses und ein Verhalten des Schließens eines Prozesses.

7. Verfahren nach Anspruch 1, das ferner Folgendes beinhaltet:
Schließen der aktuellen Anwendung und Deaktivieren einer Selbststartfunktion der aktuellen Anwendung, wenn bestimmt wird, dass die aktuelle Anwendung nicht im Hintergrund des Endgeräts laufen darf.

8. Vorrichtung zur Verwaltung einer Anwendung, die Folgendes beinhaltet:
ein Bestimmungsmodul (401), das konfiguriert ist zum: wenn festgestellt wird, dass eine aktuelle Anwendung, die im Vordergrund der Vorrichtung läuft, zum Laufen auf Hintergrund umgeschaltet wird, Bestimmen, ob die aktuelle Anwendung im Hintergrund der Vorrichtung laufen darf, gemäß einer Konfigurationsdatei, die Anwendungsidentifikationsinformationen der aktuellen Anwendung aufweist, wobei die Konfigurationsdatei mindestens Anwendungsidentifikationsinformationen einer ersten Anwendung beinhaltet, die im Hintergrund der Vorrichtung laufen darf, und Verhaltensidentifikationsinformationen eines Verhaltens, das in der ersten Anwendung betrieben werden darf, beinhaltet;
ein Erfassungsmodul (402), das konfiguriert ist zum Erfassen eines Verhaltens, das in der aktuellen Anwendung betrieben werden darf, gemäß der Konfigurationsdatei, wenn das Bestimmungsmodul (401) bestimmt, dass die aktuelle Anwendung im Hintergrund der Vorrichtung laufen darf; und
ein Schließmodul (403), das konfiguriert ist zum Schließen von Verhalten in der aktuellen Anwendung außer dem Verhalten, das betrieben werden darf und vom Erfassungsmodul (402) erfasst wird, während das zugelassene Verhalten durchgeführt wird, wobei die Verhalten der aktuellen Anwendung außer dem Verhalten, das betrieben werden darf, durch Bestimmen einer Systemressource, die zum Betreiben eines ersten Verhaltens aufgerufen werden muss, und Konfigurieren in einer Konfigurationsfunktion der aktuellen Anwendung, dass es der aktuellen Anwendung verboten ist, die Systemressource aufzurufen, um das erste Verhalten zu schließen, geschlossen werden, wobei das erste Verhalten irgendein Verhalten in der aktuellen Anwendung außer dem Verhalten ist, das in der aktuellen Anwendung betrieben werden darf.

9. Vorrichtung nach Anspruch 8, die ferner Folgendes beinhaltet:
ein erstes Sendemodul (405), das konfiguriert ist zum Senden einer Datensatzinformationsdatei an einen Server, wobei die Datensatzinformationsdatei mindestens Vorrichtungsidentifikationsinformationen der Vorrichtung, Anwendungsidentifikationsinformationen und eine Laufzeitdauer einer zweiten Anwendung, die während einer Zeitspanne von einer aktuellen Zeit bis zu einer ersten Zeit in der Vorrichtung läuft, und Verhaltensidentifikationsinformationen eines in der zweiten Anwendung betriebenen Verhaltens beinhaltet und die Datensatzinformationsdatei von dem Server zum Generieren einer Konfigurationsdatei, die den Vorrichtungsidentifikationsinformationen entspricht, verwendet wird und die erste Zeit eine Zeit ist, zu der die Datensatzinformationsdatei vor der aktuellen Zeit zuletzt gesendet wird.

10. Vorrichtung nach Anspruch 9, die ferner Folgendes beinhaltet:
ein zweites Sendemodul (406), das zum Senden einer Download-Anforderung konfiguriert ist, die die Vorrichtungsidentifikationsinformationen zum Server trägt, wobei die Download-Anforderung vom Server zum Erfassen der Konfigurationsdatei, die den Vorrichtungsidentifikationsinformationen entspricht, verwendet wird; und
ein Empfangsmodul (407), das zum Empfangen der Konfigurationsdatei, die den vom Server gesendeten Vorrichtungsidentifikationsinformationen entspricht, konfiguriert ist.

11. Vorrichtung nach Anspruch 8, wobei die Vorrichtung eine Datensatzinformationsdatei beinhaltet, wobei die Datensatzinformationsdatei Anwendungsidentifikationsinformationen einer dritten Anwendung, die während einer voreingestellten Zeitspanne ab der aktuellen Zeit in der Vorrichtung läuft, und eine Laufzeitdauer der dritten Anwendung für jedes Laufen und Verhaltensidentifikationsinformationen eines in der dritten Anwendung betriebenen Verhaltens für jedes Laufen beinhaltet; und
die Vorrichtung ferner Folgendes beinhaltet:
ein Generierungsmodul (408), das zum Generieren der Konfigurationsdatei gemäß der Datensatzinformationsdatei konfiguriert ist.

12. Vorrichtung nach Anspruch 11, wobei das Generierungsmodul (408) Folgendes beinhaltet:
ein erstes Berechnungssubmodul (4081), das zum Berechnen einer gesamten Laufzeitdauer einer in der Vorrichtung laufenden Anwendung in der Datensatzinformationsdatei konfiguriert ist;
ein erstes Auswahlsubmodul (4082), das konfiguriert ist zum Auswählen einer Anwendung, bei der die durch das erste Berechnungssubmodul (4081) berechnete gesamte Laufzeitdauer einen voreingestellten Zeitspannenschwellenwert übersteigt, als die erste Anwendung, die laufen darf;
ein zweites Berechnungssubmodul (4083), das konfiguriert ist zum Berechnen einer Anzahl, wie oft jedes Verhalten betrieben wird, das in der ersten Anwendung, die laufen darf, enthalten ist, in der Datensatzinformationsdatei;
ein zweites Auswahlsubmodul (4084), das konfiguriert ist zum Auswählen eines Verhaltens, bei dem die durch das zweite Berechnungssubmodul (4084) berechnete Anzahl einen voreingestellten Anzahlschwellenwert übersteigt, als das Verhalten, das in der ersten Anwendung betrieben werden darf; und
ein Speichersubmodul (4085), das konfiguriert ist zum Speichern, in der Konfigurationsdatei, von Anwendungsidentifikationsinformationen der ersten Anwendung, die laufen darf und durch das erste Auswahlsubmodul (4082) ausgewählt wurde, und Verhaltensidentifikationsinformationen des Verhaltens, das in der ersten Anwendung betrieben werden darf und durch das zweite Auswahlsubmodul (4084) ausgewählt wurde.

13. Computerlesbares Speichermedium, auf dem Anweisungen gespeichert werden, die bei Ausführung durch einen Prozessor einer Vorrichtung die Vorrichtung zum Durchführen des Verfahrens zur Verwaltung einer Anwendung nach einem der Ansprüche 1 bis 7 veranlassen.

## Revendications

1. Procédé de gestion d'une application, comprenant :
s'il est détecté qu'une application courante s'exécutant au premier plan d'un terminal est commutée à l'arrière-plan pour s'exécuter, déterminer (301) si l'application courante est autorisée à s'exécuter à l'arrière-plan du terminal conformément à un fichier de configuration qui comprend une information d'identification d'application de l'application courante, dans lequel le fichier de configuration comprend au moins une information d'identification d'application d'une première application autorisée à s'exécuter à l'arrière-plan du terminal et une information d'identification de comportement d'un comportement autorisé à être actionné dans la première application ;
acquérir (302) un comportement autorisé à être actionné dans l'application courante conformément au fichier de configuration, s'il est déterminé que l'application courante est autorisée à s'exécuter à l'arrière-plan du terminal ; et
fermer (303) des comportements dans l'application courante autres que le comportement autorisé à être actionné tout en effectuant le comportement autorisé, comprend :
déterminer une ressource système requise à demander pour actionner un premier comportement, dans lequel le premier comportement est un comportement quelconque dans l'application courante autre que le comportement autorisé à être actionné dans l'application courante ; et configurer dans une fonction de configuration de l'application courante qu'il est interdit à l'application courante de demander la ressource système de manière à fermer le premier comportement.

2. Procédé selon la revendication 1, comprenant en outre :
envoyer (201) un fichier d'informations d'enregistrement à un serveur, dans lequel le fichier d'informations d'enregistrement comprend au moins une information d'identification de terminal du terminal, une information d'identification d'application et une longueur de temps d'exécution d'une deuxième application s'exécutant dans le terminal durant une période allant d'une heure courante à une première heure et une information d'identification de comportement d'un comportement actionné dans la deuxième application, et le fichier d'informations d'enregistrement est utilisé par le serveur pour générer un fichier de configuration correspondant à l'information d'identification de terminal, et la première heure est une heure à laquelle le fichier d'informations d'enregistrement a été envoyé en dernier avant l'heure courante.

3. Procédé selon la revendication 2, comprenant en outre :
envoyer (204) une requête de téléchargement portant l'information d'identification de terminal au serveur,
dans lequel la requête de téléchargement est utilisée par le serveur pour acquérir le fichier de configuration correspondant à l'information d'identification de terminal ; et
recevoir (206) le fichier de configuration correspondant à l'information d'identification de terminal envoyée par le serveur.

4. Procédé selon la revendication 1, dans lequel le terminal comprend un fichier d'informations d'enregistrement, dans lequel le fichier d'informations d'enregistrement comprend une information d'identification d'application d'une troisième application s'exécutant dans le terminal durant une période préréglée commençant à partir de l'heure courante, et une longueur de temps d'exécution de la troisième application pour chaque exécution, et une information d'identification de comportement d'un comportement actionné dans la troisième application pour chaque exécution ; et
le procédé comprend en outre :
générer le fichier de configuration conformément au fichier d'informations d'enregistrement.

5. Procédé selon la revendication 4, dans lequel générer le fichier de configuration conformément au fichier d'informations d'enregistrement comprend :
calculer une longueur totale de temps d'exécution d'une application s'exécutant dans le terminal, dans le fichier d'informations d'enregistrement ;
sélectionner une application avec la longueur totale de temps d'exécution dépassant un seuil de période préréglé, comme la première application autorisée à s'exécuter ;
calculer un nombre de fois que chaque comportement inclus dans la première application autorisée à s'exécuter est actionné, dans le fichier d'informations d'enregistrement ;
sélectionner un comportement avec le nombre de fois dépassant un nombre seuil préréglé, comme le comportement autorisé à être actionné dans la première application ; et
stocker, dans le fichier de configuration, l'information d'identification d'application de la première application autorisée à s'exécuter et l'information d'identification de comportement du comportement autorisé à être actionné dans la première application.

6. Procédé selon la revendication 1, dans lequel les comportements dans l'application courante comprennent au moins : un comportement d'accès à un réseau de communication mobile, un comportement d'utilisation de fidélité sans fil, un comportement de poussée, un comportement de fourniture de service de localisation, un comportement d'utilisation d'horloge système, un comportement de blocage d'un processus et un comportement de fermeture d'un processus.

7. Procédé selon la revendication 1, comprenant en outre :
fermer l'application courante et invalider la fonction d'auto-démarrage de l'application courante, s'il est déterminé que l'application courante n'est pas autorisée à s'exécuter à l'arrière-plan du terminal.

8. Appareil de gestion d'une application, comprenant :
un module de détermination (401), configuré pour : s'il est détecté qu'une application courante s'exécutant au premier plan de l'appareil est commutée à l'arrière-plan pour s'exécuter, déterminer si l'application courante est autorisée à s'exécuter à l'arrière-plan de l'appareil conformément à un fichier de configuration qui comprend une information d'identification d'application de l'application courante, dans lequel le fichier de configuration comprend au moins une information d'identification d'application d'une première application autorisée à s'exécuter à l'arrière-plan de l'appareil et une information d'identification de comportement d'un comportement autorisé à être actionné dans la première application ;
un module d'acquisition (402), configuré pour acquérir un comportement autorisé à être actionné dans l'application courante conformément au fichier de configuration, si le module de détermination (401) détermine que l'application courante est autorisée à s'exécuter à l'arrière-plan de l'appareil ; et
un module de fermeture (403), configuré pour fermer des comportements dans l'application courante autres que le comportement autorisé à être actionné et acquis par le module d'acquisition (402) tout en effectuant le comportement autorisé, dans lequel les comportements de l'application courante autres que le comportement autorisé à être actionné sont fermés en déterminant une ressource système requise à demander pour actionner un premier comportement, et configurer dans une fonction de configuration de l'application courante qu'il est interdit à l'application courante de demander la ressource système de manière à fermer le premier comportement, dans lequel le premier comportement est un comportement quelconque dans l'application courante autre que le comportement autorisé à être actionné dans l'application courante.

9. Appareil selon la revendication 8, comprenant en outre :
un premier module d'envoi (405), configuré pour envoyer un fichier d'informations d'enregistrement à un serveur, dans lequel le fichier d'informations d'enregistrement comprend au moins une information d'identification d'appareil de l'appareil, une information d'identification d'application et une longueur de temps d'exécution d'une deuxième application s'exécutant dans l'appareil durant une période allant d'une heure courante à une première heure et une information d'identification de comportement d'un comportement actionné dans la deuxième application, et le fichier d'informations d'enregistrement est utilisé par le serveur pour générer un fichier de configuration correspondant à l'information d'identification d'appareil, et la première heure est une heure à laquelle le fichier d'informations d'enregistrement a été envoyé en dernier avant l'heure courante.

10. Appareil selon la revendication 9, comprenant en outre :
un deuxième module d'envoi (406), configuré pour envoyer une requête de téléchargement portant l'information d'identification de l'appareil au serveur, dans lequel la requête de téléchargement est utilisée par le serveur pour acquérir le fichier de configuration correspondant à l'information d'identification de l'appareil ; et
un module de réception (407), configuré pour recevoir le fichier de configuration correspondant à l'information d'identification d'appareil envoyée par le serveur.

11. Appareil selon la revendication 8, dans lequel l'appareil comprend un fichier d'informations d'enregistrement, dans lequel le fichier d'informations d'enregistrement comprend une information d'identification d'application d'une troisième application s'exécutant dans l'appareil durant une période préréglée commençant à partir de l'heure courante, et une longueur de temps d'exécution de la troisième application pour chaque exécution et une information d'identification de comportement d'un comportement actionné dans la troisième application pour chaque exécution ; et
l'appareil comprend en outre :
un module de génération (408), configuré pour générer le fichier de configuration conformément au fichier d'informations d'enregistrement.

12. Appareil selon la revendication 11, dans lequel le module de génération (408) comprend :
un premier sous-module de calcul (4081), configuré pour calculer une longueur totale de temps d'exécution d'une application s'exécutant dans l'appareil, dans le fichier d'informations d'enregistrement;
un premier sous-module de sélection (4082), configuré pour sélectionner une application avec la longueur totale de temps d'exécution calculée par le premier sous-module de calcul (4081) dépassant un seuil de période prédéterminé, comme la première application autorisée à s'exécuter ;
un deuxième sous-module de calcul (4083), configuré pour calculer un nombre de fois que chaque comportement inclus dans la première application autorisée à s'exécuter est actionné, dans le fichier d'informations d'enregistrement ;
un deuxième sous-module de sélection (4084), configuré pour sélectionner un comportement avec le nombre de fois calculé par le deuxième sous-module de calcul (4083) dépassant un nombre seuil préréglé, comme le comportement autorisé à être actionné dans la première application ; et
un sous-module de stockage (4085), configuré pour stocker, dans le fichier de configuration, une information d'identification d'application de la première application autorisée à s'exécuter et sélectionnée par le premier sous-module de sélection (4082) et une information d'identification de comportement du comportement autorisé à être actionné dans la première application et sélectionné par le deuxième sous-module de sélection (4084).

13. Support de stockage lisible par ordinateur ayant des instructions stockées dessus qui, lorsque exécutées par un processeur d'un dispositif, font que le dispositif mette en oeuvre le procédé de gestion d'une application selon l'une quelconque des revendications 1 à 7.
